# EUROPÄISCHE PATENTSCHRIFT

(11) **EP 2 512 256 B1**
(45) Veröffentlichungstag und Bekanntmachung des Hinweises auf die Patenterteilung: **27.05.2015**
(21) Anmeldenummer: 10805679.7
(22) Anmeldetag: 17.12.2010
(51) Int. Cl.: A22C 21/00

(54) **VORRICHTUNG UND VERFAHREN ZUM ENTFERNEN EINES GEFLÜGELBRUSTKNORPELS**
DEVICE AND METHOD FOR REMOVING A POULTRY BREAST GRISTLE
DISPOSITIF ET PROCÉDÉ POUR ENLEVER LE CARTILAGE COSTAL D'UNE VOLAILLE

(30) Priorität: 17.12.2009 DE 202009017070 U
(43) Veröffentlichungstag der Anmeldung: 24.10.2012
(73) Patentinhaber: Marel Stork Poultry Processing B.V., 5831 AV Boxmeer (NL)
(72) Erfinder: JANSSEN, Jörg, 26180 Rastede (DE)
(74) Vertreter: EP&C
(86) Internationale Anmeldenummer: PCT/DE2010/001487
(87) Internationale Veröffentlichungsnummer: WO 2011/072660

(56) Entgegenhaltungen:
- US-A- 3 541 634
- US-A- 3 665 553
- US-A- 3 889 317
- US-B1- 6 283 847

## Beschreibung

Die Erfindung betrifft eine Vorrichtung zum Entfernen eines Brustknorpels von einer Geflügelbrustkarkasse.

Der Brustknorpel (engl. "keel bone"), der bei Geflügel die Verlängerung des Brustbeins bildet, wird von der Pharmaindustrie als Rohstoff zur Gewinnung von Chondroitinsulfat und Hyaluronsäure-Natrium und anderen medizinisch wertvollen Aminosäuren benötigt.

Das Abtrennen und Sammeln der kleinen, nur wenige Gramm leichten Knorpelstücke ist in der Regel aufwendige Handarbeit, so dass nicht alle theoretisch gewinnbaren Brustknorpelstücke tatsächlich gewinnbar sind und der Bedarf die verfügbare Menge um ein Mehrfaches übersteigt.

Ein automatisiertes Verfahren ist aus dem Dokument US 6 283 847 B1 bekannt.

Die Geflügelzerlegung ist in Europa weitgehend automatisiert und erfolgt zum größten Teil durch Maschinen, bei denen in einem ersten Schritt zur Trennung des Brustfilets vom Geflügelkörper das komplette Bruststück mit Knochen (Sternum, Brustknorpel und Rippenbögen) abgetrennt wird und das Bruststück in einen weiteren Zerlegeautomaten eingespannt wird. Darin wird das Bruststück über einen Förderer durch die Zerlegevorrichtung gezogen. Eine Gewinnung des Brustknorpels von Hand ist bei den üblicherweise angewendeten Fördergeschwindigkeiten, bspw. ca. 15 km/h, unmöglich.

Die Aufgabe der Erfindung besteht darin, eine Vorrichtung vorzuschlagen, mit der der Brustknorpel von einem Bruststück abgetrennt werden kann, ohne die Fördergeschwindigkeit des Bruststücks zu verlangsamen oder das Bruststück in einer anderen Vorrichtung neu fassen zu müssen.

Diese Aufgabe wird erfindungsgemäß durch eine Vorrichtung zum Entfernen eines Brustknorpels von einer Geflügelbrustkarkasse gemäß Anspruch 1 gelöst, mit einer Transporteinrichtung zum

Bewegen der Brustkarkasse entlang einer geradlinigen, insbesondere horizontalen Bewegungsbahn in einer festen Orientierung, wobei eine Medianebene der Brustkarkasse senkrecht zur Bewegungsbahn ausgerichtet ist, einer ortsfest angeordneten Schneideinrichtung mit einer Transversalschneide, zur Ausführung eines durch den Brustknorpel gehenden Transversalschnitts, der in einer senkrecht zu der Medianebene angeordneten Transversalschnittebene verläuft, wobei die Transversalschnittebene mit einer senkrecht zur Medianebene angeordneten Transversalebene der Brustkarkasse einen Winkel bis zu 30° einschließt, und mit einer Frontalschneide zur Ausführung eines durch den Brustknorpel gehenden Frontalschnitts, der in einer senkrecht zu der Medianebene angeordneten Frontalschnittebene verläuft, wobei die Frontalschnittebene mit einer senkrecht zu der Medianebene (20) und senkrecht zu der Transversalebene angeordneten Frontalebene der Brustkarkasse einen Winkel bis zu 30° einschließt.

Aufgrund der vorgegebenen Orientierung der feststehenden Schneideinrichtung im Verhältnis zu der bewegten Brustkarkasse können die beiden Schneiden, Transversal- und Frontalschneide, den Brustknorpel definiert vom Brustbein abschneiden, ohne dass eine unerwünschte Berührung zwischen Transversal- und/oder Frontalschneide und der Transporteinrichtung oder sonstigen Teilen wie Fleisch oder Knochen der Brustkarkasse erfolgt.

Definitionsgemäß verlaufen die Transversal- und Frontalebenen senkrecht zur Medianebene der Brustkarkasse und senkrecht zueinander, wobei allerdings die Transversal- und Frontalschnittebenen nicht zwangsläufig senkrecht zueinander stehen müssen.

Bevorzugt ist vorgesehen, dass die Transversalschneide und/oder die Frontalschneide eben ist (sind). Weiterhin ist bevorzugt vorgesehen, dass die Transversalschneide und/oder die Frontalschneide geradlinig ausgebildet ist (sind). Die Transversalschneide verläuft bevorzugt in der Transversalschnittebene. Auch die weitere Transversalschneide verläuft bevorzugt in der Transversalschnittebene. Die Frontalschneide verläuft bevorzugt in der Frontalschnittebene.

Weiter kann vorgesehen sein, dass die Transversalschneide und/oder die Frontalschneide spitzwinklig zur Bewegungsbahn angeordnet ist (sind), insbesondere unter einem Winkel von bis zu 10°, 15° oder 20° dazu.

Die Transversalschneide und die Frontalschneide gehen von einer entgegen der Bewegungsrichtung weisenden Spitze aus.

Dabei kann vorgesehen sein, dass ein der Spitze benachbarter Anfangsbereich (bis zu 10%, 20% oder 30% einer Gesamtlänge, mit der Spitze beginnend, der jeweiligen Schneide der Transversalschneide und/oder der Frontalschneide stumpf ist. Ein zwischen den Anfangsbereichen von Transversal- und Frontalschneiden eingeschlossener Spitzenwinkel kann zwischen 5° und 30°, bevorzugt zwischen 10° und 20° liegen.

Die Erfindung sieht bevorzugt vor, dass der Transversalschneide eine dieser gegenüberstehende weitere Transversalschneide zugeordnet ist, zur Ausführung eines weiteren Transversalschnitts, insbesondere in der Transversalschnittebene. Die weitere Transversalschneide kann als rotierende Schneidklinge oder als starr gehaltene Schneidklinge ausgebildet sein, etwa als in Bewegungsrichtung der Brustkarkasse spitzwinklig mit der Transversalschneide zusammenlaufend angeordnete Schneide.

In Weiterbildung der Erfindung kann vorgesehen sein, dass über und/oder unter der Transversalschneide ein mechanischer Mitnehmer und/oder Abstreifer zum Bewegen eines von der Brustkarkasse ganz oder teilweise abgetrennten Brustknorpels in Bewegungsrichtung der Brustkarkasse und/oder zum Abstreifen der Transversalschneide angeordnet ist.

Der Mitnehmer oder Abstreifer kann mit einem oberhalb der Transversalschneide angeordneten Antriebselement gekoppelt sein, das durch die Transporteinrichtung oder die durch diese bewegte Brustkarkasse bewegbar ist.

In einer bevorzugten Ausführungsform ist vorgesehen, dass das Antriebselement und der Mitnehmer jeweils radial verlaufende Arme aufweisen und drehbar gelagert sind.

Alternativ oder zusätzlich zu dem Mitnehmer kann oberhalb und/oder unterhalb der Transversalschneide oder der weiteren Transversalschneide ein Abstreifer vorgesehen sein, der nach jedem Schneidvorgang die Transversalschneide oder weitere Transversalschneide abstreift, zweckmäßigerweise entgegen der Bewegungsrichtung der Brustkarkasse.

Die Erfindung betrifft ferner ein Verfahren zum Entfernen eines Brustknorpels von einer Geflügelbrustkarkasse gemäß Anspruch 10, insbesondere unter Verwendung einer erfindungsgemäßen Vorrichtung, bei dem die Brustkarkasse entlang einer geradlinigen, insbesondere horizontalen Bewegungsbahn bewegt wird und eine Medianebene der Brustkarkasse senkrecht zur Bewegungsbahn ausgerichtet ist, eine ortsfest angeordnete Schneideinrichtung mit zwei Schneiden bereitgestellt wird, und durch Zusammenwirken der bewegten Brustkarkasse mit der ortsfesten Schneideinrichtung ein durch den Brustknorpel verlaufender Transversalschnitt ausgeführt wird, der in einer senkrecht zu der Medianebene angeordneten Transversalschnittebene verläuft, wobei die Transversalschnittebene mit einer senkrecht zur Medianebene angeordneten Transversalebene der Brustkarkasse einen Winkel bis zu 30° einschließt, und ein durch den Brustknorpel verlaufender Frontalschnitt ausgeführt wird, der in einer senkrecht zu der Medianebene angeordneten Frontalschnittebene verläuft, wobei die Frontalschnittebene mit einer senkrecht zu der Medianebene und senkrecht zu der Transversalebene angeordneten Frontalebene der Brustkarkasse einen Winkel bis zu 30° einschließt, wobei wenigstens ein Teil des Brustknorpels von der Brustkarkasse abgetrennt wird.

Bevorzugt ist eine Frontalebene der Brustkarkasse vertikal ausgerichtet, oder innerhalb eines Winkelbereichs von bis zu 10°, 15°, 20° oder 30° zur Vertikalen.

Der Transversalschnitt kann bevorzugt in sagittaler Richtung horizontal nach vorn verlaufend ausgeführt werden.

Der Frontalschnitt kann bevorzugt in vertikaler Richtung nach unten verlaufend ausgeführt werden.

Es ist vorgesehen, dass der Transversalschnitt und der Frontalschnitt von einem gemeinsamen Ausgangspunkt oder einer gemeinsamen Ausgangslinie verlaufen.

Vorzugsweise ist vorgesehen, dass ein dem Transversalschnitt entgegengerichtet verlaufender weiterer Transversalschnitt ausgeführt wird, der in der gleichen Ebene wie der Transversalschnitt verlaufen kann.

Transversalschnitt, Frontalschnitt und weiterer Transversalschnitt können gleichzeitig ausgeführt werden.

Bevorzugt ist vorgesehen, dass mindestens einer von Transversalschnitt, Frontalschnitt und weiterem Transversalschnitt proportional zu einem Bewegungsfortschritt der Brustkarkasse fortschreitend ausgeführt wird, insbesondere im Verhältnis oder mit einer Geschwindigkeit von 5%, 10%, 15%, 20%, 30%, 40% oder 50% einer Transportgeschwindigkeit der Brustkarkasse.

Die Erfindung wird nachfolgend anhand eines Ausführungsbeispiels weiter erläutert, wobei auf eine Zeichnung Bezug genommen wird, in der
Fig. 1 eine Seitenansicht eines Fixierungselements für eine Geflügelbrustkarkasse zeigt,
Fig. 2 eine Vorderansicht des Fixierungselements nach Fig. 1 zeigt,
Fig. 3 eine Draufsicht von oben auf das Fixierungselement nach Fig. 1 und 2 zeigt,
Fig. 4 eine perspektivische Ansicht schräg von vom auf das Fixierungselement nach Fig. 1 bis 3 zeigt,
Fig. 5 eine perspektivische Ansicht schräg von vorn auf das Fixierungselement nach Fig. 1 bis 4 mit einer daran gehaltenen Geflügelbrustkarkasse zeigt,
Fig. 6 eine Seitenansicht des Fixierungselements mit daran gehaltener Geflügelbrustkarkasse zeigt,
Fig. 7 eine Vorderansicht der an dem Fixierungselement gehaltenen Geflügelbrustkarkasse zeigt,
Fig. 8 eine perspektivische schematische Darstellung einer Schneideinrichtung vor Eindringen in einen Brustknorpel einer Brustkarkasse zeigt,
Fig. 9 die Schneideinrichtung nach Fig. 8 unmittelbar nach Eindringen in den Brustknorpel zeigt,
Fig. 10 die Schneideinrichtung beim Einschneiden in den Brustknorpel zeigt,
Fig. 11 eine perspektivische Ansicht der Schneideinrichtung zeigt,
Fig. 12 eine perspektivische Ansicht einer weiteren Ausführungsform der Erfindung zeigt,
Fig. 13 eine Draufsicht auf die Ausführungsform nach Fig. 12 zeigt.
Fig. 14 eine Vorderansicht in Bewegungsrichtung der Ausführungsform nach Fig. 12 und 13 zeigt,
Fig. 15 eine Ansicht von unten auf die Ausführungsform nach Fig. 12 bis 14 zeigt,
Fig. 16 eine auseinandergezogene Darstellung wesentlicher Elemente der Ausführungsform nach Fig. 12 bis 15 zeigt und
Fig. 17 eine Draufsicht auf die Schneideinrichtung der Ausführungsform nach Fig. 12 bis 16 zeigt.

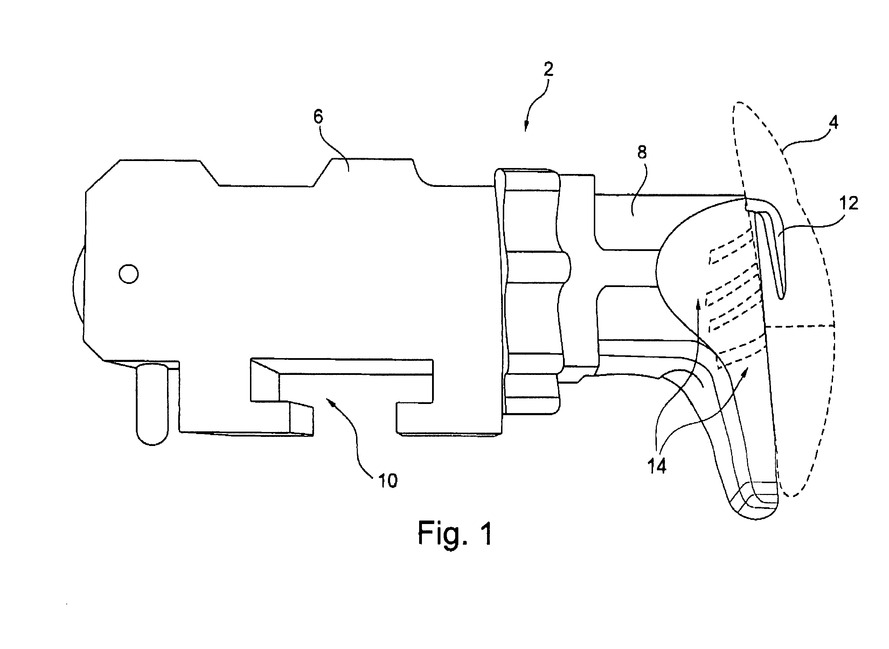

Unter Bezugnahme auf Fig. 1 bis 7 wird zunächst eine Transporteinrichtung zum Halten und Bewegen von Geflügelbrustkarkassen sowie die Ausrichtung und Fixierung einer Geflügelbrustkarkasse an der Transporteinrichtung erläutert.

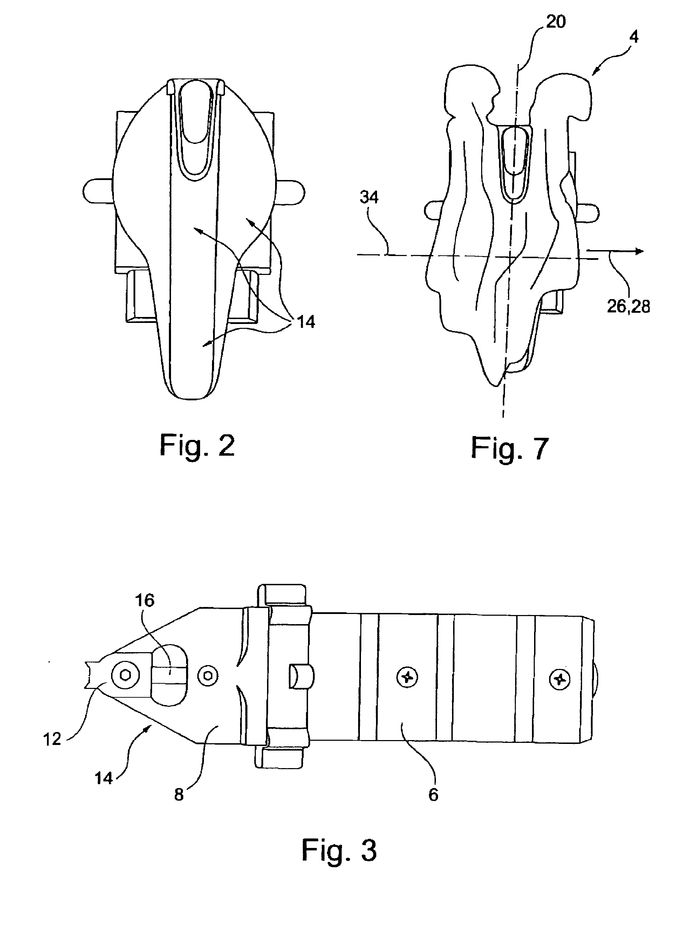

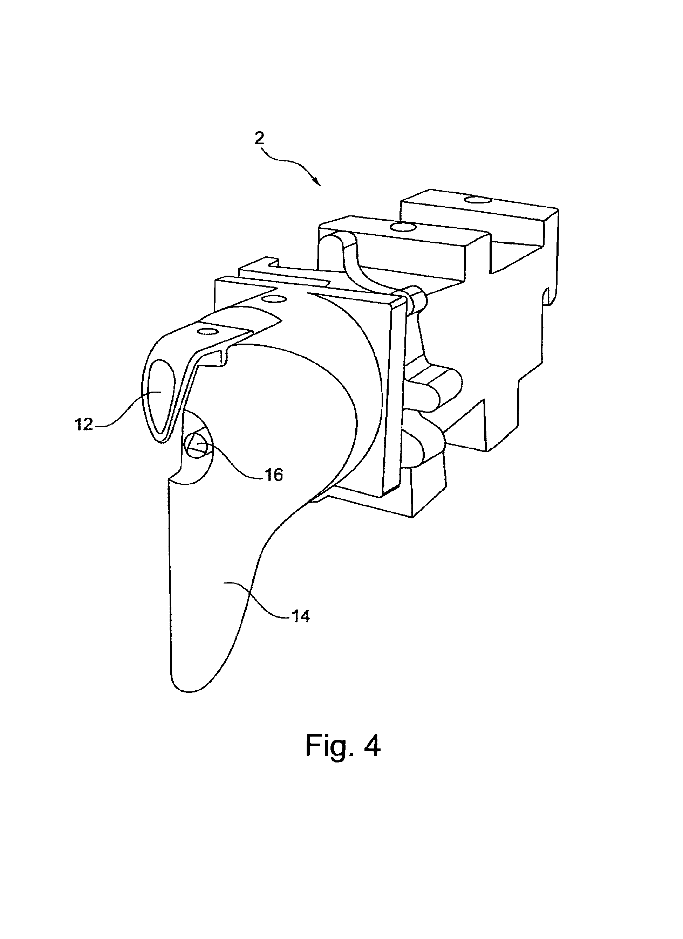

Fig. 1 zeigt eine Seitenansicht eines Fixierungselements 2 für eine gestrichelt angedeutete Geflügelbrustkarkasse 4 mit einem Führungsabschnitt 6 und einem Fixierungsabschnitt 8. Der Führungsabschnitt 6 weist eine im Querschnitt T-förmige hinterschnittene Führungsnut 10 auf, mit der das Fixierungselement 2 an einer im Querschnitt entsprechend ausgebildeten Führungsschiene einer Transporteinrichtung gezogen werden kann, um die an dem Fixierungsabschnitt 8 gehaltene Geflügelbrustkarkasse 4 nacheinander zu verschiedenen Bearbeitungsstationen zu transportieren. Die Geflügelbrustkarkasse 4 ist zwischen einem hakenförmigen Vorsprung 12 und einer abgewinkelten, angepasst konturierten Anlagefläche 14 des Fixierungsabschnitts 8 einschiebbar und mittels eines in Richtung des Vorsprungs 12 ausschiebbaren Fixierungszapfens 16 (Fig. 4) formschlüssig und spielarm zu fixieren, wie Fig. 7 in Gegenüberstellung zu Fig. 2 zeigt.

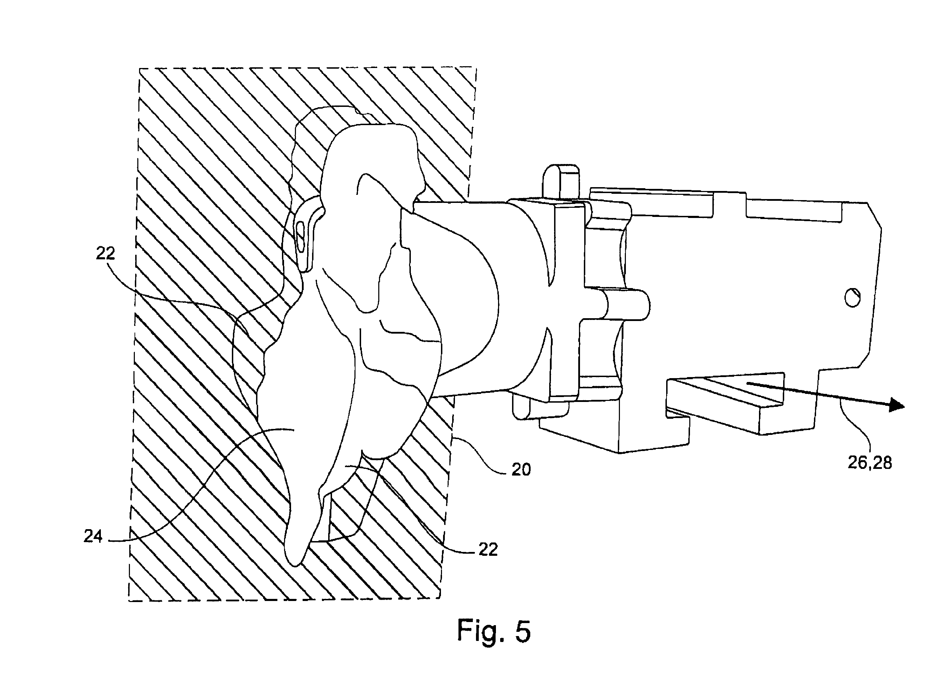

In der an dem Fixierungsabschnitt 8 fixierten Stellung, die in Fig. 5 bis 7 dargestellt ist, verläuft eine Medianebene 20 der Geflügelbrustkarkasse 4 vertikal und in Längsrichtung des Fixierungselements 2, also mittig durch die Anlagefläche 14, den Fixierungszapfen 16 und den Vorsprung 12. Da die Medianebene der Geflügelbrustkarkasse diejenige Ebene ist, die als Symmetrieebene mittig durch Rückgrat und Brustbein verläuft, ist mit dieser Orientierung gleichzeitig eine vertikale Ausrichtung von Brustbein 22 und Brustknorpel 24 sichergestellt. Die Medianebene 20 verläuft ersichtlich senkrecht zu einer Bewegungsbahn 26, entlang der sich das Fixierungselement 2 in der Transporteinrichtung in einer Bewegungsrichtung 28 vorwärtsbewegt.

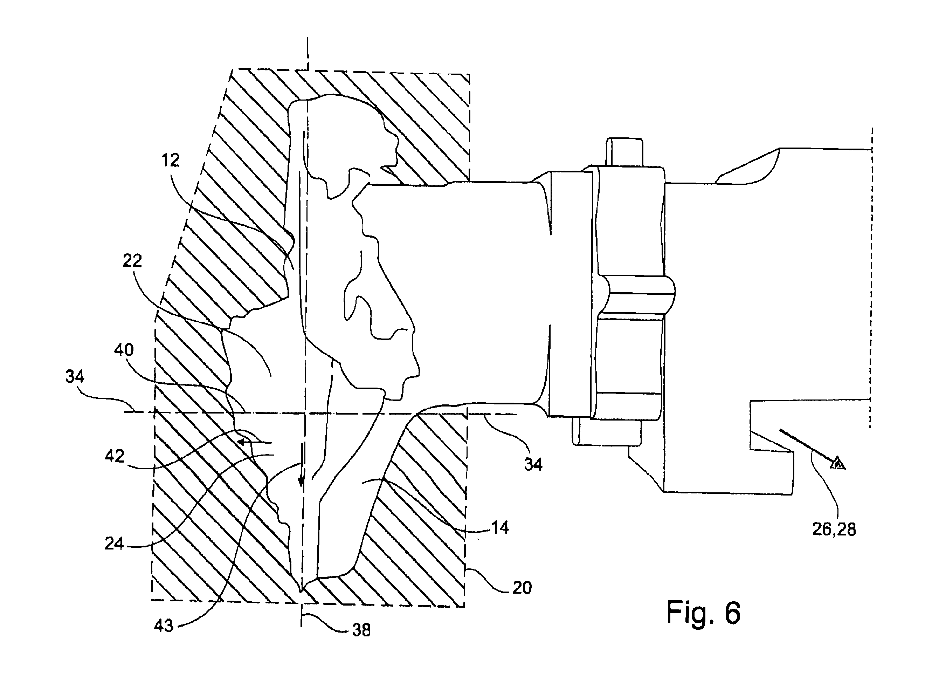

Da in der Praxis an einer bestimmten Verarbeitungsanlage und Transporteinrichtung stets Schlachttiere ein und derselben Größe verarbeitet werden, ist sichergestellt, dass auch die Brustkarkassen 4 stets gleiche Größenabmessungen aufweisen, so dass deren Fixierung an den Fixierungselementen 2 reproduzierbar und spielarm erfolgen kann. Fig. 6 zeigt in einer Seitenansicht noch einmal deutlich die Anordnung von Brustbein 22 und Brustknorpel 24, der sich unmittelbar benachbart zu einem unteren Abschnitt der Anlagefläche 14 befindet.

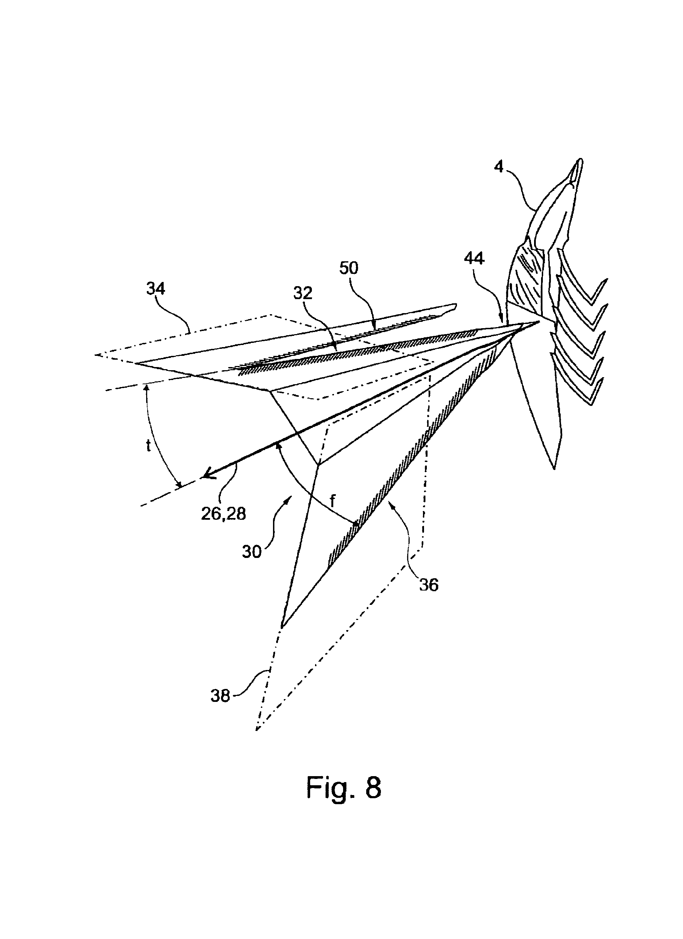

Unter Bezugnahme auf Fig. 8 bis 11 wird nachfolgend die erfindungsgemäße Vorrichtung zur Abtrennung des Brustknorpels erläutert. Eine in Bezug auf die Transporteinrichtung und die bewegten Fixierungselemente 2 ortsfest angeordnete Schneideinrichtung 30 ist so positioniert, dass die Geflügelbrustkarkassen, die an den entlang einer vorgegebenen Bewegungsbahn vorwärtsbewegten Fixierungselementen 2 fixiert sind, zwangsläufig mit der Schneideinrichtung in Eingriff gelangen in dadurch der Brustknorpel gezielt abgetrennt wird, ohne dass die Brustkarkasse ansonsten in irgendeiner Weise beeinträchtigt wird.

Die Schneideinrichtung 30 weist hierfür mindestens zwei Schneiden auf, nämlich zunächst eine Transversalschneide 32, die in dem dargestellten Ausführungsbeispiel parallel zu einer Transversalebene 34 (s. auch Fig. 7) der Brustkarkasse 4 angeordnet ist, und weiterhin eine Frontalschneide 36, die parallel zu einer Frontalebene 38 der Brustkarkasse 4 angeordnet ist. Die Transversalebene 34 erstreckt sich senkrecht zur Medianebene 20 und verläuft in dem dargestellten Ausführungsbeispiel im Wesentlichen horizontal. Die Frontalebene 38 erstreckt sich ebenfalls senkrecht zur Medianebene 20 und außerdem senkrecht zur Transversalebene 34 und verläuft in dem dargestellten Ausführungsbeispiel vertikal. Da sich die Medianebene 20 senkrecht zur Bewegungsbahn 26 und Bewegungsrichtung 28 der Karkasse erstreckt, verlaufen die Transversal- und Frontalebenen 34, 38 jeweils parallel zur Bewegungsbahn 26 und Bewegungsrichtung 28.

Weil bezüglich des Wuchses des Brustknorpels und auch bezüglich der Fixierung der Brustkarkasse 4 an dem Fixierungselement 2 Variationen möglich sind, kann es zweckmäßig sein, wenn die Transversalschneide 32 nicht exakt in der Transversalebene 34 verläuft, sondern in einer unter einem Winkel dazu verlaufenden Transversalschnittebene, um beispielsweise einem nicht horizontalen, sondern schräg verlaufenden Übergang 40 (Fig. 6) zwischen Brustbein 22 und Brustknorpel 24 exakter folgen zu können. In jedem Falle ist es zweckmäßig, wenn die Transversalschneide 32 in einer zur Bewegungsbahn 26 parallelen Ebene verläuft, damit während des Vorbeilaufs der Brustkarkasse an der stillstehenden Schneide kein Höhenversatz in einer Richtung quer zur Transportbewegung auftritt.

Um einen allmählichen Schneidvorgang in einer bspw. sagittalen Richtung 42 zu ermöglichen, d.h. in einer in Medianebene 20 und Transversalebene 34 verlaufenden, von dem Fixierungselement 2 wegweisenden Richtung, ist die Transversalschneide 32 unter einem spitzen Winkel t bezüglich der Bewegungsbahn 26 bzw. Bewegungsrichtung 28 angeordnet.

Die Frontalschneide 36 muss ebenfalls nicht exakt in der Frontalebene 38 verlaufen, sondern kann in einer unter einem Winkel dazu verlaufenden Frontalschnittebene angeordnet sein, ebenfalls mit dem Ziel, gewisse Abweichungen von Wuchs oder Fixierung einzelner Brustkarkassen auszugleichen. Um auch im Bereich der Frontalschneide 36 einen allmählichen Schneidfortschritt in Abwärtsrichtung 43 entsprechend der Vorwärtsbewegung der Brustkarkasse zu erzielen, ist die Frontalschneide 36 ebenso wie die Transversalschneide 32 unter einem spitzen Winkel f zur Bewegungsbahn 26 bzw. Bewegungsrichtung 28 der Brustkarkasse 4 angeordnet.

Transversalschneide 32 und Frontalschneide 36 sind so angeordnet, dass sie im Wesentlichen an einem Punkt zusammenlaufen, wobei sie von einer Spitze 44 ausgehen, in deren Bereich sie vergleichsweise stumpf sind. Die Spitze 44 ist so positioniert, dass sie in Höhe des Übergangs 40 zwischen Brustbein und Brustknorpel unmittelbar benachbart zum Brustbein in den Brustknorpel oder zwischen Brustknorpel und Fixierungselement eindringt, so dass von diesem Punkt aus die Transversalschneide 32 einen im Wesentlichen horizontalen Schnitt entlang des Übergangs 40 in Richtung 42 und die Frontalschneide 36 einen im Wesentlichen vertikalen Schnitt zwischen Brustbein und Brustknorpel in Richtung 43 ausführen kann.

Die stumpfe Ausbildung der Schneiden im Bereich der Spitze bewirkt, dass beim Eindringen der Spitze zunächst noch keine Schneidwirkung eintritt, sondern der Brustknorpel durch die Keilwirkung der Spitze teilweise vom Fixierungselement an- oder abgehoben wird und der anschließende Schneidvorgang erleichtert und verbessert wird.

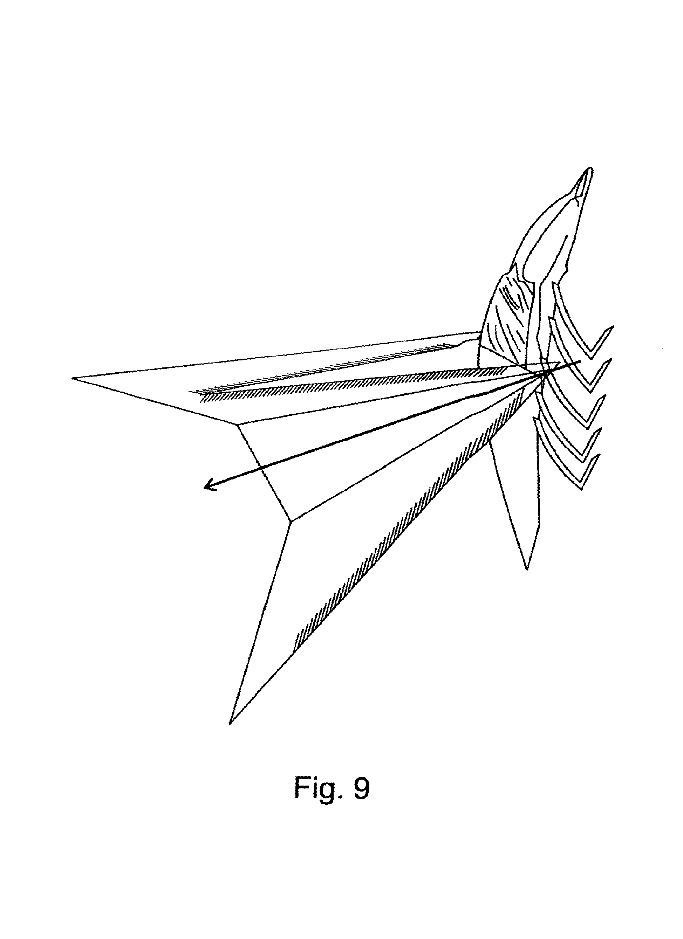

Fig. 9 zeigt diese erste Phase des Eindringens der Spitze zwischen Brustknorpel und Brustbein bzw. Rippenknochen.

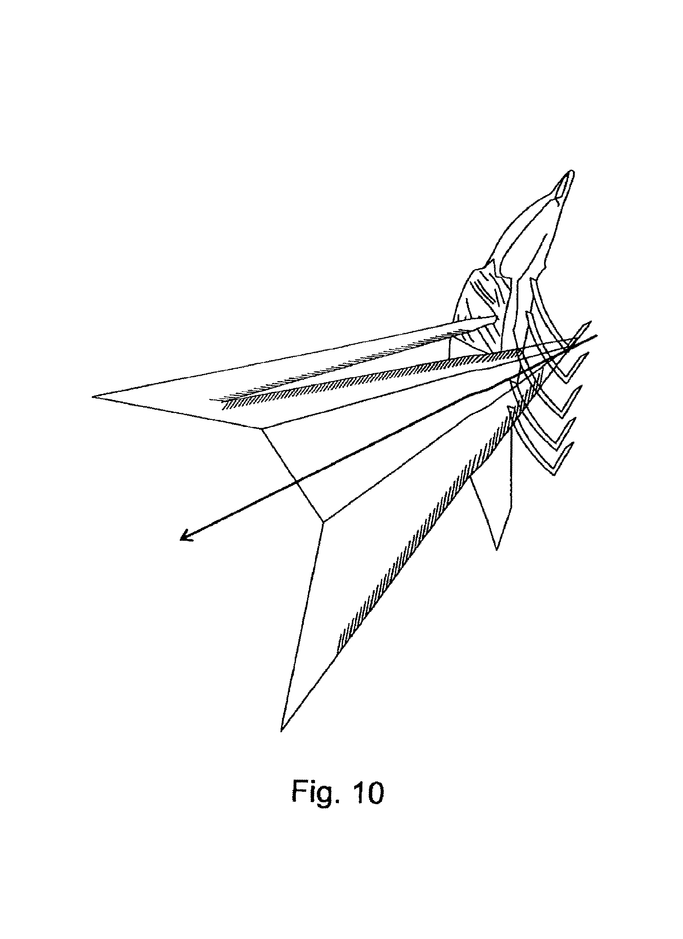

Fig. 10 zeigt den weiteren Schneidverlauf, wobei nunmehr die scharfen Bereiche von Transversal- und Frontalschneiden zur Wirkung kommen.

Um das vollständige Abschneiden des Brustknorpels zu erleichtern, ist in vorteilhafter Weise eine weitere Transversalschneide 50 vorgesehen, die in der Ebene der Transversalschneide 32 angeordnet ist und ebenfalls spitzwinklig zur Bewegungsbahn 26 ausgerichtet ist, allerdings in umgekehrter Orientierung, so dass zwischen den beiden Transversalschneiden 32, 50 ein zulaufender, sich verengender Spalt gebildet ist, in den der Brustknorpel aufgrund der Bewegung der Brustkarkasse 4 hineinbewegt und an dessen Ende er definiert abgeschnitten wird.

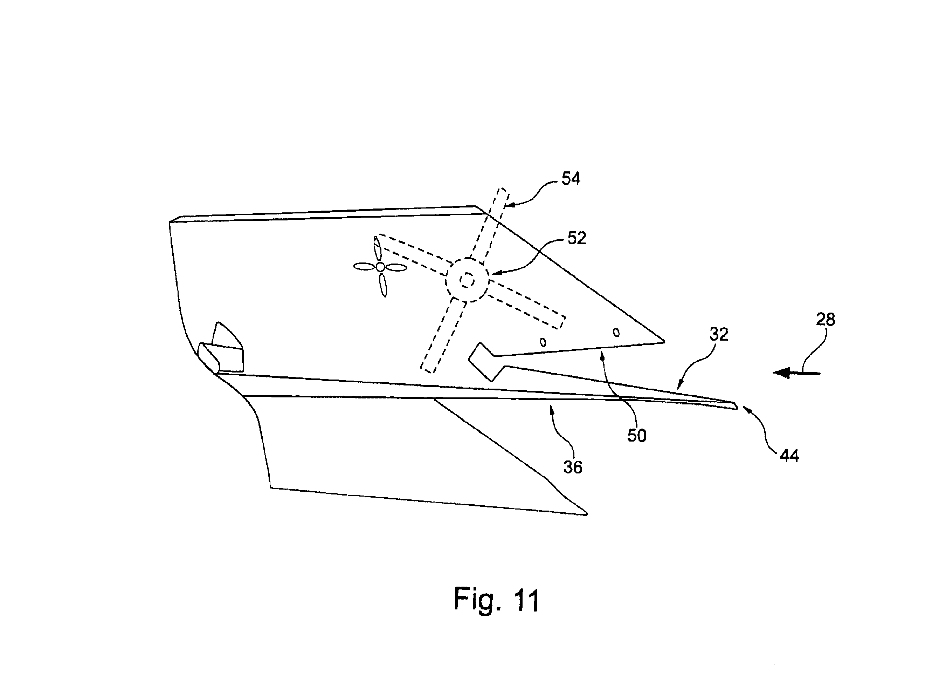

Fig. 11 zeigt eine Draufsicht auf eine erfindungsgemäße Schneideinrichtung 30, wobei die spitzwinklig zur Bewegungsbahn 26 angeordneten Transversal- und Frontalschneiden 32, 36, die Spitze 44 sowie die weitere Transversalschneide 50 zu erkennen sind. Gestrichelt angedeutet ist ferner ein mechanischer Mitnehmer 52 mit Armen 54 unterhalb der Transversalschneiden 32, 50, dessen Zweck darin besteht, jeweils beim Vorbeilauf einer Brustkarkasse den im Wesentlichen oder ganz abgetrennten Brustknorpel in Bewegungsrichtung 28 weiterzubewegen, damit kein Stau im Bereich der Schneideinrichtung entsteht. Der Mitnehmer 52 kann mit einem oberhalb der Transversalschneide 32 angeordneten drehbaren Antriebselement drehfest verbunden sein, welches ebenfalls einen oder mehrere radial verlaufende Arm(e) aufweist, der oder die (jeweils) von einer vorbeilaufenden Brustkarkasse mitzunehmen ist (sind).

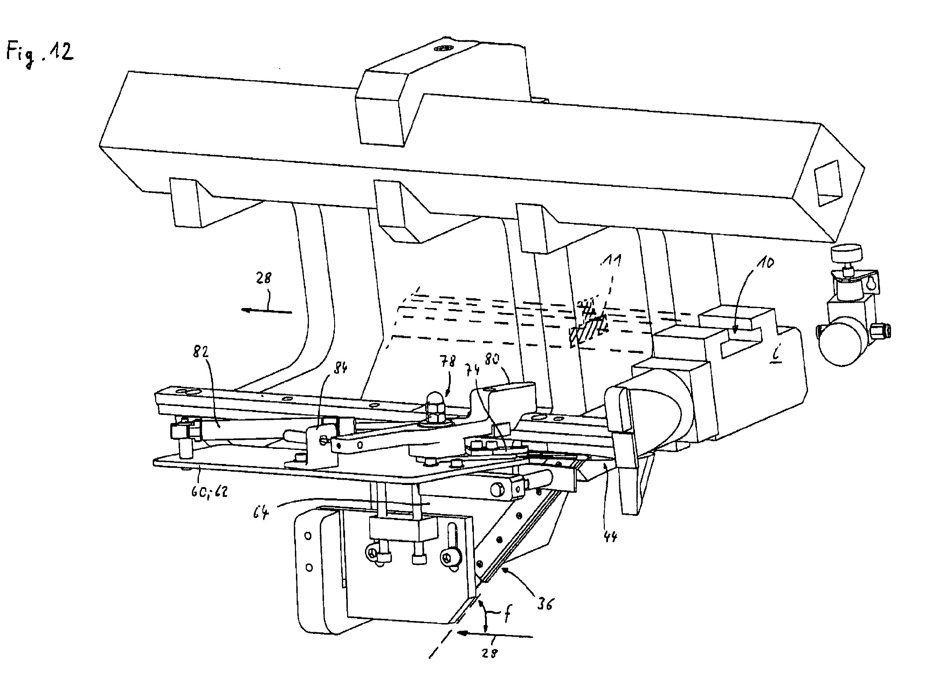

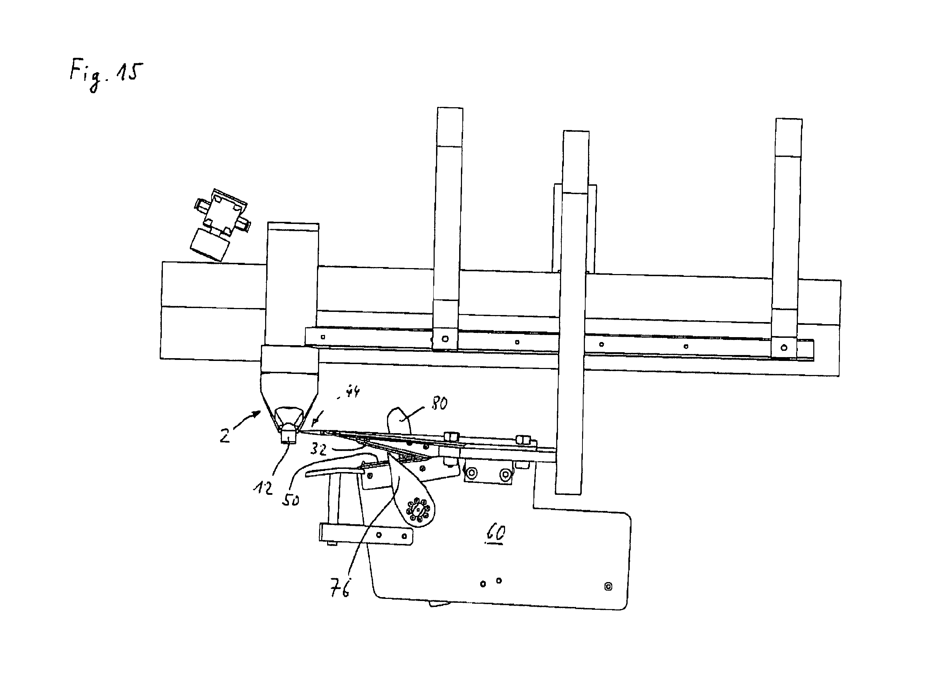

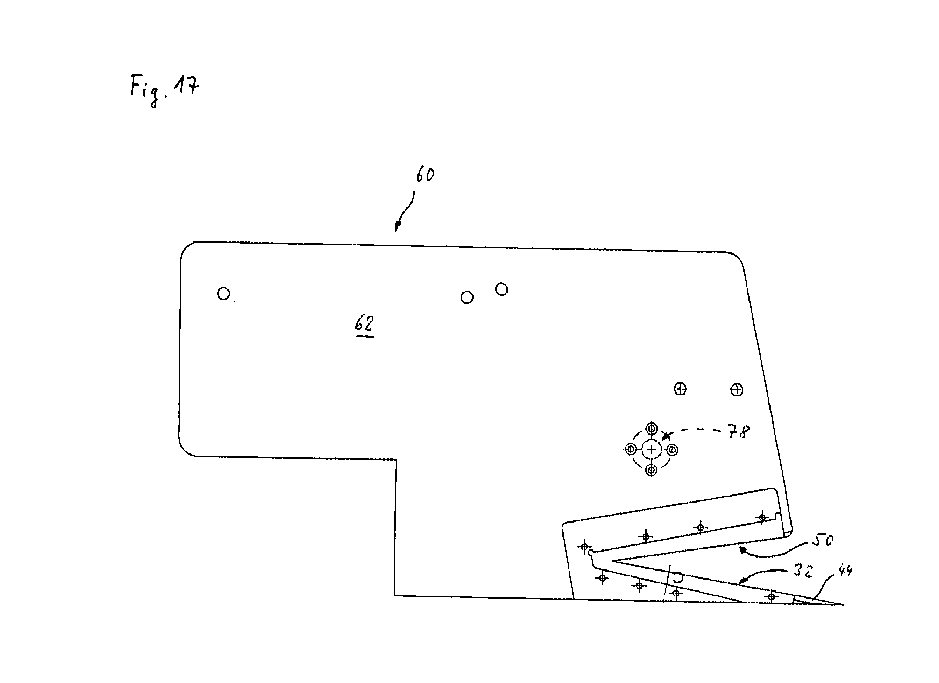

Anhand Fig. 12 bis 17 wird nachfolgend eine weitere Ausführungsform der Erfindung erläutert, die in vielerlei Hinsicht mit der vorangehend erläuterten Ausführungsform übereinstimmt, so dass für gleiche Elemente gleiche Bezugszeichen verwendet werden.

Das Fixierungselement 2 mit Anlageflächen 14, dessen Vorsprung 12 nur angedeutet ist, ist mit seiner Führungsnut 10 auf einer gestrichelt angedeuteten Führungsschiene 11 geführt, deren Querschnitt (in Fig. 12 schraffiert angedeutet) mit dem der Führungsnut 10 übereinstimmt.

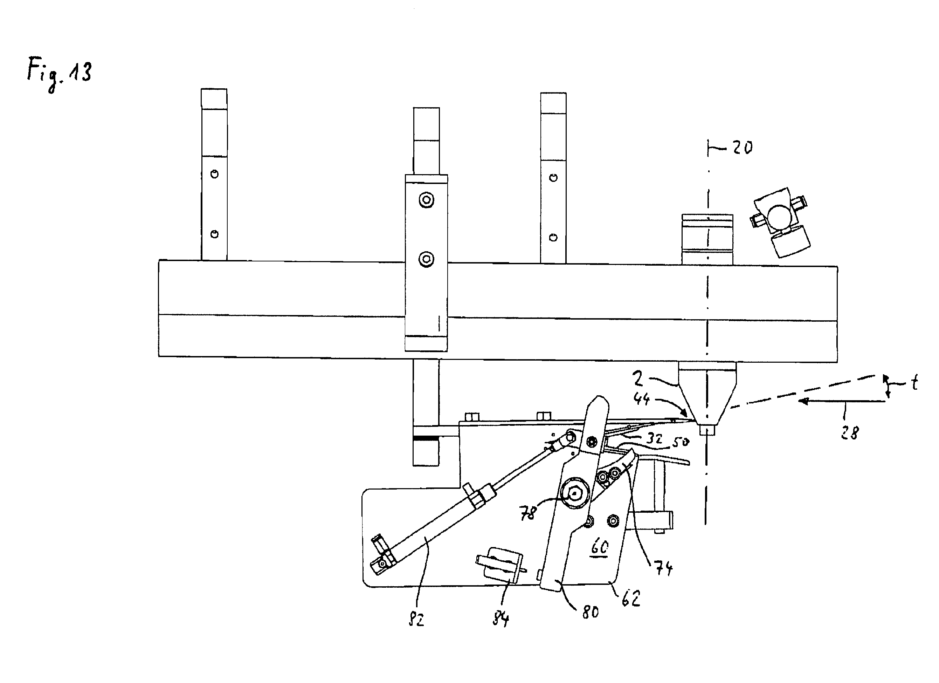

Wie Fig. 13, 15 und 17 zeigen, ist eine Transversalschneide 32 und eine in gleicher Ebene angeordnete weitere Transversalschneide 50 vorgesehen, die spitzwinklig unter ca. 20° zueinander und unter gleichen Winkeln zur Bewegungsrichtung der ankommenden Brustkarkassen bzw. zur Längsrichtung der Führungsschiene 11 angeordnet sind.

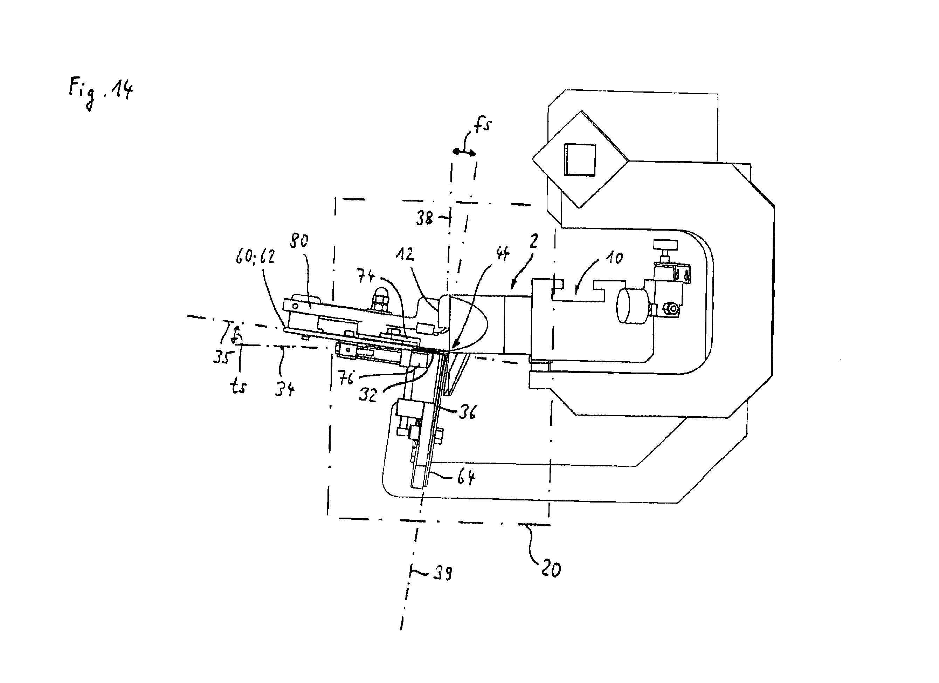

In Fig. 13 ist die Position der Medianebene 20 verdeutlicht, die sich senkrecht zur Darstellungsebene mittig durch das Fixierungselement 2 und senkrecht zur (horizontalen) Bewegungsrichtung 28 erstreckt. Wie Fig. 14 zeigt, in der auch die Medianebene 20 als in der Darstellungsebene liegende Fläche angedeutet ist, verlaufen die Transversalschneide 32 sowie die nicht gesondert bezeichnete weitere Transversalschneide 50 in einer Transversalschnittebene 35, die senkrecht zur Medianebene 20 angeordnet ist. Die Transversalschnittebene 35 kann mit der Transversalebene 34, die durch die Geometrie der Brustkarkasse 4 festgelegt ist und in der Regel horizontal verläuft, einen Winkel ts von bis zu 30° einschließen, vorliegend etwa 5 bis 10°.

Die Frontalschneide 36 verläuft in einer Frontalschnittebene 39, die senkrecht zur Medianebene 20 angeordnet ist und mit der Frontalebene 38, die durch die Geometrie der Brustkarkasse 4 festgelegt ist und senkrecht zur Transversalebene 34 verläuft, im dargestellten Beispiel also vertikal, einen Winkel fs von bis zu 30° einschließen kann, vorliegend etwa 5 bis 10°.

Wie Fig. 14 weiter zeigt, gehen die Transversalschneide 32 und die Frontalschneide 36 von der Spitze 44 aus.

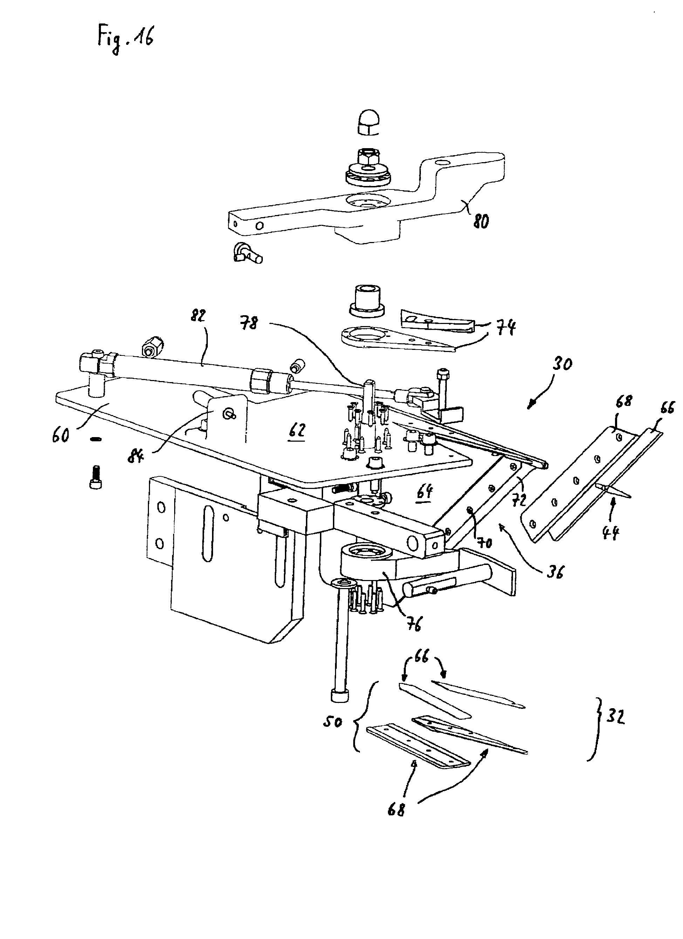

Wie insbesondere Fig. 16 erkennen lässt, sind sämtliche Schneiden 32, 36 und 50 an einem rechtwinkligen Schneidenkörper 60 angebracht, der einen etwa horizontalen Schenkel 62 aufweist, an dem die Transversalschneide 32 sowie die weitere Transversalschneide 50 angebracht sind, und einen davon abgehenden etwa vertikalen Schenkel 64, an dem die Frontalschneide 36 angebracht ist. Im Übergangsbereich zwischen horizontalem und vertikalem Schenkel 62, 64 steht die Spitze 44 entgegen der Bewegungsrichtung 28 vor. Sämtliche Schneiden sind als austauschbare Schneidplatten oder -klingen ausgebildet, die durch mittels Schrauben an dem Schneidenkörper 60 befestigte Spannplatten leicht wechselbar fixiert sind. Fig. 16 zeigt dies für die Frontalschneide 36, die als Schneidplatte 66 gebildet ist, welche mittels einer Spannplatte 68 und Schrauben 70 an dem vertikalen Schenkel 64 auswechselbar gehalten ist, sowie die Transversalschneiden 32, 50. Die Position der jeweiligen Schneidplatte ist dabei durch eine Aussparung in einer Außenkante des jeweiligen Schenkels genau festgelegt, etwa durch eine Aussparung 72 im vertikalen Schenkel 64.

An dem horizontalen Schenkel 62 des Schneidenkörpers 60 sind ein oberer Abstreifer 74 und ein unterer Abstreifer 76 drehfest auf einer senkrecht zur Transversalschnittebene 35 drehbar gelagerten Abstreiferwelle 78 gehalten. Auf der Abstreiferwelle 78 ist ferner ein Betätigungshebel 80 drehfest angebracht, der bei Ankunft eines Fixierungselements 2 bzw. einer Brustkarkasse 4 durch diese verschwenkt wird und dabei die Abstreifer 74, 76 mitnimmt, so dass diese oberhalb und unterhalb der Transversalschneide 32 und der weiteren Transversalschneide 50 entlang bewegt werden und zunächst in Bewegungsrichtung 28 an diesen vorbeistreifen. Dabei werden möglicherweise hängengebliebene Fleischreste abgestreift, und außerdem erfüllen der Abstreifer 74 und/oder der Abstreifer 76 eine Mitnehmerfunktion wie bei der ersten Ausführungsform, um den Brustknorpel an den Schneiden entlang zu bewegen und ein Hängenbleiben zu vermeiden.

An dem Betätigungshebel 80 ist ein federbeaufschlagter Druckzylinder 82 angelenkt, der den Betätigungshebel 80 nach Durchlauf eines Fixierungselements 2 bzw. einer Brustkarkasse 4 in Ausgangsposition zurückbewegt (in Fig. 13 im Uhrzeigersinn gesehen), bis der Betätigungshebel 80 gegen einen schneidenkörperfesten Anschlag 84 anstößt. Dabei werden die Abstreifer nach Durchlauf der Brustkarkasse entgegen der Bewegungsrichtung 28 bewegt und streifen die Transversal- und weitere Transversalschneiden nochmals ab.

**Bezugszeichenliste**

| | | | |
|---|---|---|---|
| 2 | Fixierungselement (Transporteinrichtung) | t | Winkel zwischen 32 und 28 |
| 4 | Geflügelbrustkarkasse | f | Winkel zwischen 36 und 28 |
| 6 | Führungsabschnitt | ts | Winkel zwischen 35 und 34 |
| 8 | Fixierungsabschnitt | fs | Winkel zwischen 39 und 38 |
| 10 | Führungsnut | | |
| 11 | Führungsschiene | | |
| 12 | Vorsprung | | |
| 14 | Anlagefläche | | |
| 16 | Fixierungszapfen | | |
| 20 | Medianebene | | |
| 22 | Brustbein | | |
| 24 | Brustknorpel | | |
| 26 | Bewegungsbahn | | |
| 28 | Bewegungsrichtung | | |
| 30 | Schneideinrichtung | | |
| 32 | Transversalschneide | | |
| 34 | Transversalebene | | |
| 35 | Transversalschnittebene | | |
| 36 | Frontalschneide | | |
| 38 | Frontalebene | | |
| 39 | Frontalschnittebene | | |
| 40 | Übergang | | |
| 42 | sagittale Richtung | | |
| 43 | Abwärtsrichtung | | |
| 44 | Spitze | | |
| 50 | weitere Transversalschneide | | |
| 52 | Mitnehmer | | |
| 54 | Arm | | |
| 60 | Schneidenkörper | | |
| 62 | horizontaler Schenkel | | |
| 64 | vertikaler Schenkel | | |
| 66 | Schneidplatte | | |
| 68 | Spannplatte | | |
| 70 | Schraube | | |
| 72 | Aussparung | | |
| 74 | oberer Abstreifer | | |
| 76 | unterer Abstreifer | | |
| 78 | Abstreiferwelle | | |
| 80 | Betätigungshebel | | |
| 82 | Druckzylinder | | |
| 84 | Anschlag | | |

## Patentansprüche

1. Vorrichtung zum Entfernen eines Brustknorpels (24) von einer Geflügelbrustkarkasse (4), mit einer Transporteinrichtung (2) zum Bewegen der Brustkarkasse (4) entlang einer geradlinigen, insbesondere horizontalen Bewegungsbahn (26) in einer festen Orientierung, wobei eine Medianebene (20) der Brustkarkasse (4) senkrecht zur Bewegungsbahn (26) ausgerichtet ist, einer ortsfest angeordneten Schneideinrichtung (30) mit einer Transversalschneide (32), zur Ausführung eines durch den Brustknorpel (24) gehenden Transversalschnitts, der in einer senkrecht zu der Medianebene (20) angeordneten Transversalschnittebene verläuft, wobei die Transversalschnittebene mit einer senkrecht zur Medianebene (20) angeordneten Transversalebene (34) der Brustkarkasse (4) einen Winkel bis zu 30° einschließt, und mit einer Frontalschneide (36) zur Ausführung eines durch den Brustknorpel (24) gehenden Frontalschnitts, der in einer senkrecht zu der Medianebene (20) angeordneten Frontalschnittebene verläuft, wobei die Frontalschnittebene mit einer senkrecht zu der Medianebene (20) und senkrecht zu der Transversalebene (34) angeordneten Frontalebene (38) der Brustkarkasse (4) einen Winkel bis zu 30° einschließt, und wobei die Transversalschneide (32) und die Frontalschneide (36) von einer entgegen der Bewegungsrichtung (28) weisenden Spitze (44) ausgehen.

2. Vorrichtung nach Anspruch 1, **dadurch gekennzeichnet, dass** die Transversalschneide (32) und/oder die Frontalschneide (36) eben ist (sind).

3. Vorrichtung nach Anspruch 1 oder 2, **dadurch gekennzeichnet, dass** die Transversalschneide (32) und/oder die Frontalschneide (36) geradlinig ausgebildet ist (sind).

4. Vorrichtung nach einem der vorangehenden Ansprüche, **dadurch gekennzeichnet, dass** die Transversalschneide (32) und/oder die Frontalschneide (36) spitzwinklig zur Bewegungsbahn (26) angeordnet ist, insbesondere unter einem Winkel von bis zu 10°, 15° oder 20° dazu.

5. Vorrichtung nach einem der vorangehenden Ansprüche **dadurch gekennzeichnet, dass** ein der Spitze (44) benachbarter Anfangsbereich der Transversalschneide (32) und/oder der Frontalschneide (36) stumpf ist.

6. Vorrichtung nach einem der vorangehenden Ansprüche, **dadurch gekennzeichnet, dass** der Transversalschneide (32) eine dieser gegenüberstehende und in Bewegungsrichtung der Brustkarkasse (4) spitzwinklig mit der Transversalschneide (32) zusammenlaufend angeordnete weitere Transversalschneide (50) zugeordnet ist, zur Ausführung eines ergänzenden Transversalschnitts, insbesondere in der Transversalschnittebene.

7. Vorrichtung nach einem der vorangehenden Ansprüche, **dadurch gekennzeichnet, dass** über und/oder unter der Transversalschneide (32) ein mechanischer Mitnehmer (52) und/oder Abstreifer (74, 76) zum Bewegen eines von der Brustkarkasse (4) ganz oder teilweise abgetrennten Brustknorpels (24) in Bewegungsrichtung (28) der Brustkarkasse (4) und/oder zum Abstreifen der Transversalschneide (32) angeordnet ist.

8. Vorrichtung nach Anspruch 7, **dadurch gekennzeichnet, dass** der Mitnehmer (52) oder Abstreifer (74, 76) mit einem oberhalb der Transversalschneide (32) angeordneten Antriebselement (80) gekoppelt ist, das durch die Transporteinrichtung (2) oder die durch diese bewegte Brustkarkasse bewegbar ist.

9. Vorrichtung nach Anspruch 8, **dadurch gekennzeichnet, dass** das Antriebselement und der Mitnehmer (52) jeweils radial verlaufende Arme (54) aufweisen.

10. Verfahren zum Entfernen eines Brustknorpels (24) von einer Geflügelbrustkarkasse (4), insbesondere unter Verwendung einer Vorrichtung nach einem der Ansprüche 1 bis 9, bei dem die Brustkarkasse (4) entlang einer geradlinigen, insbesondere horizontalen Bewegungsbahn (26) bewegt wird und eine Medianebene (20) der Brustkarkasse (4) senkrecht zur Bewegungsbahn (26) ausgerichtet ist, eine ortsfest angeordnete Schneideinrichtung (30) mit einer Transversalschneide (32) und einer Frontalschneide (36), wobei die Transversalschneide (32) und die Frontalschneide (36) von einer entgegen der Bewegungsrichtung (28) weisende Spitze (44) ausgehen, bereitgestellt wird, und durch Zusammenwirken der bewegten Brustkarkasse (4) mit der Transversalschneide (32) von der ortsfesten Schneideinrichtung (30) ein durch den Brustknorpel (24) verlaufender Transversalschnitt ausgeführt wird, der in einer senkrecht zu der Medianebene (20) angeordneten Transversalschnittebene verläuft, wobei die Transversalschnittebene mit einer senkrecht zur Medianebene (20) angeordneten Transversalebene (24) der Brustkarkasse (4) einen Winkel bis zu 30° einschließt, und mit der Frontalschneide (36) ein durch den Brustknorpel verlaufender Frontalschnitt ausgeführt wird, der in einer senkrecht zu der Medianebene (20) angeordneten Frontalschnittebene verläuft, wobei die Frontalschnittebene mit einer senkrecht zu der Medianebene (20) und senkrecht zu der Transversalebene (34) angeordneten Frontalebene (38) der Brustkarkasse (4) einen Winkel bis zu 30° einschließt, wobei wenigstens ein Teil des Brustknorpels (24) von der Brustkarkasse (4) abgetrennt wird.

11. Verfahren nach Anspruch 10, **dadurch gekennzeichnet, dass** die Frontalebene (38) der Brustkarkasse (24) vertikal oder innerhalb eines Winkelbereichs von bis zu 10°, 15°, 20° oder 30° zur Vertikalen ausgerichtet ist.

12. Verfahren nach Anspruch 10 oder 11, **dadurch gekennzeichnet, dass** der Transversalschnitt und der Frontalschnitt von einem gemeinsamen Ausgangspunkt oder einer gemeinsamen Ausgangslinie verlaufen.

13. Verfahren nach einem der Ansprüche 10 bis 12, **dadurch gekennzeichnet, dass** Transversal- und Frontalschnitt gleichzeitig ausgeführt werden.

14. Verfahren nach einem der Ansprüche 10 bis 13, **dadurch gekennzeichnet, dass** ein dem Transversalschnitt entgegengerichtet verlaufender weiterer Transversalschnitt ausgeführt wird, der in der gleichen Ebene wie der Transversalschnitt verlaufen kann.

## Claims

1. A device for removing breast cartilage (24) from a poultry breast carcass (4), said device having a conveying device (2) for moving the breast carcass (4) along a straight, in particular horizontal path of motion (26) in a fixed orientation, wherein a median plane (20) of the breast carcass (4) is aligned perpendicularly with respect to the path of motion (26), a positionally fixed cutting device (30) having a transversal blade (32) for carrying out a transversal cut, which passes through the breast cartilage (24) and extends in a transversal cutting plane arranged perpendicularly with respect to the median plane (20), wherein the transversal cutting plane encloses an angle of up to 30° with a transversal plane (34) of the breast carcass (4) which transversal plane (24) is arranged perpendicularly with respect to the median plane (20), and having a frontal blade (36) for carrying out a frontal cut which passes through the breast cartilage (24) and extends in a frontal cutting plane arranged perpendicularly with respect to the median plane (20), wherein the frontal cutting plane encloses an angle of up to 30° with a frontal plane (38) of the breast carcass (4) which frontal plane (38) is arranged perpendicularly with respect to the median plane (20) and perpendicularly with respect to the transversal plane (34), and wherein the transversal blade (32) and the frontal blade (36) extend from a tip (44) pointing in opposition to the direction of movement (28).

2. The device as claimed in claim 1, **characterized in that** the transversal blade (32) and/or the frontal blade (36) is (are) plane.

3. The device as claimed in claim 1 or 2, **characterized in that** the transversal blade (32) and/or the frontal blade (36) is (are) realized in a straight manner.

4. The device as claimed in one of the preceding claims, **characterized in that** the transversal blade (32) and/or the frontal blade (36) is arranged at an acute angle with respect to the path of motion (26), in particular at an angle of up to 10°, 15° or 20° with respect thereto.

5. The device as claimed in one of the preceding claims, **characterized in that** a start region adjacent the tip (44) of the transversal blade (32) and/or of the frontal blade (36) is obtuse.

6. The device as claimed in one of the preceding claims, **characterized in that** the transversal blade (32) has associated therewith a further transversal blade (50), which is opposite said transversal blade (32) and is arranged converging with the transversal blade (32) at an acute angle in the direction of movement of the breast carcass (4), for carrying out a supplementary transversal cut, in particular in the transversal cutting plane.

7. The device as claimed in one of the preceding claims, **characterized in that** a mechanical entrainment means (52) and/or scraper (74, 76) for moving breast cartilage (24), separated completely or in part from the breast carcass (4), in the direction of movement (28) of the breast carcass (4) and/or for scraping the transversal blade (32) is arranged over and/or under the transversal blade (32).

8. The device as claimed in claim 7, **characterized in that** the entrainment means (52) or scraper (74, 76) is coupled to a drive element (80) which is arranged above the transversal blade (32) and is movable by means of the conveying device (2) or by means of the breast carcass which is moved by said conveying device.

9. The device as claimed in claim 8, **characterized in that** the drive element and the entrainment means (52) each have radially extending arms (54).

10. A method for removing breast cartilage (24) from a poultry breast carcass (4), in particular using a device as claimed in one of claims 1 to 9, where the breast carcass (4) is moved along a straight, in particular horizontal path of motion (26) and a median plane (20) of the breast carcass (4) is aligned perpendicularly with respect to the path of motion (26), a positionally fixed cutting device (30) with a transversal blade (32) and a frontal blade (36), wherein the transversal blade (32) and the frontal blade (36) extend from a tip (44) pointing in opposition to the direction of movement (28), is provided, and by means of interaction between the moved breast carcass (4) and the transversal blade (32) from the positionally fixed cutting device (30), a transversal cut is carried out which extends through the breast cartilage (24) and extends in a transversal cutting plane arranged perpendicularly with respect to the median plane (20), wherein the transversal cutting plane encloses an angle of up to 30° with a transversal plane (24) of the breast carcass (4) which transversal plane (24) is arranged perpendicularly with respect to the median plane (20), and with the frontal blade (36) a frontal cut is carried out which extends through the breast cartilage and extends in a frontal cutting plane arranged perpendicular with respect to the median plane (20), wherein the frontal cutting plane encloses an angle of up to 30° with a frontal plane (38) of the breast carcass (4) which frontal plane (38) is arranged perpendicularly with respect to the median plane (20) and perpendicularly with respect to the transversal plane (34), wherein at least part of the breast cartilage (24) is separated from the breast carcass (4).

11. The method as claimed in claim 10, **characterized in that** the frontal plane (38) of the breast carcass (24) is aligned vertically or within an angular range of up to 10°, 15°, 20° or 30° with respect to the vertical.

12. The method as claimed in claim 10 or 11, **characterized in that** the transversal cut and the frontal cut extend from a common starting point or a common starting line.

13. The method as claimed in one of claims 10 to 12, **characterized in that** a transversal cut and a frontal cut are carried out at the same time.

14. The method as claimed in one of claims 10 to 13, **characterized in that** there is carried out a further transversal cut, which extends in the opposite direction to the transversal cut and can extend in the same plane as the transversal cut.

## Revendications

1. Dispositif pour l'élimination d'un cartilage de poitrine (24) d'une carcasse de poitrine de volaille (4), avec un dispositif de transport (2) pour le déplacement de la carcasse de poitrine (4) le long d'une trajectoire (26) linéaire, plus particulièrement horizontale, dans une orientation fixe, un plan médian (20) de la carcasse de poitrine (4) étant perpendiculaire à la trajectoire (26), un dispositif de coupe (30) stationnaire avec un tranchant transversal (32), pour la réalisation d'une coupe transversale à travers le cartilage de poitrine (24), qui s'étend dans un plan de coupe transversale perpendiculaire au plan médian (20), le plan de coupe transversale formant, avec un plan transversal (34), perpendiculaire au plan médian (20), de la carcasse de poitrine (4), un angle pouvant aller jusqu'à 30°, et avec un tranchant frontal (36) pour la réalisation d'une coupe frontale à travers le cartilage de poitrine (24), qui s'étend dans un plan de coupe frontale perpendiculaire au plan médian (20), le plan de coupe frontale formant, avec un plan frontal (38) de la carcasse de poitrine (4), perpendiculaire au plan médian (20) et perpendiculaire au plan transversal (34), un angle pouvant aller jusqu'à 30° et le tranchant transversal (32) et le tranchant frontal (36) partant d'une pointe (44) orientée à l'opposé de la direction de déplacement (28).

2. Dispositif selon la revendication 1, **caractérisé en ce que** le tranchant transversal (32) et/ou le tranchant frontal (36) est (sont) régulier(s).

3. Dispositif selon la revendication 1 ou 2, **caractérisé en ce que** le tranchant transversal (32) et/ou le tranchant frontal (36) est (sont) linéaire(s).

4. Dispositif selon l'une des revendications précédentes, **caractérisé en ce que** le tranchant transversal (32) et/ou le tranchant frontal (36) forme un angle aigu avec la trajectoire de déplacement (26), plus particulièrement un angle pouvant aller jusqu'à 10°, 15°, ou 20°.

5. Dispositif selon l'une des revendications précédentes, **caractérisé en ce qu'**une zone initiale du tranchant transversal (32) et/ou du tranchant frontal (36), adjacente à la pointe (44), n'est pas tranchante.

6. Dispositif selon l'une des revendications précédentes, **caractérisé en ce qu'**au tranchant transversal (32) correspond un autre tranchant transversal (50) opposé à celui-ci et convergeant, en formant un angle aigu, dans la direction de déplacement de la carcasse de poitrine (4), avec le tranchant transversal (32), pour la réalisation d'une coupe transversale complémentaire, plus particulièrement dans le plan de coupe transversale.

7. Dispositif selon l'une des revendications précédentes, **caractérisé en ce que**, au-dessus et/ou en dessous du tranchant transversal (32), un taquet d'entraînement mécanique (52) et/ou un racleur (74, 76) est prévu pour le déplacement d'un cartilage de poitrine (24), séparé entièrement ou partiellement de la carcasse de poitrine (4), dans la direction de déplacement (28) de la carcasse de poitrine (4) et/ou pour le raclage du tranchant transversal (32).

8. Dispositif selon la revendication 7, **caractérisé en ce que** le taquet d'entraînement (52) ou le racleur (74, 76) est couplé avec un élément d'entraînement (80) disposé au-dessus du tranchant transversal (32), qui est peut être déplacé par le dispositif de transport (2) ou la carcasse de poitrine déplacée par celui-ci.

9. Dispositif selon la revendication 8, **caractérisé en ce que** l'élément d'entraînement et le taquet d'entraînement (52) présentent chacun des bras radiaux (54).

10. Procédé d'élimination d'un cartilage de poitrine (24) d'une carcasse de poitrine de volaille (4), plus particulièrement à l'aide d'un dispositif selon l'une des revendications 1 à 9, dans lequel la carcasse de poitrine (4) est déplacée le long d'une trajectoire (26) linéaire, plus particulièrement horizontale et un plan médian (20) de la carcasse de poitrine (4) est perpendiculaire à la trajectoire (26), un dispositif de coupe (30) stationnaire, avec un tranchant transversal (32) et un tranchant frontal (36), le tranchant transversal (32) et le tranchant frontal (36) partant d'une pointe (44) orientée contre la direction de déplacement (28), est prévu et, grâce à l'interaction de la carcasse de poitrine (4) déplacée avec le tranchant transversal (32) du dispositif de coupe (30) stationnaire, une coupe transversale s'étendant à travers le cartilage de poitrine (24) est réalisée, qui s'étend dans un plan de coupe transversale perpendiculaire au plan médian (20), le plan de coupe transversale formant, avec un plan transversal (24) de la carcasse de poitrine (4), perpendiculaire au plan médian (20), un angle pouvant aller jusqu'à 30°, et avec le tranchant frontal (36), une coupe frontale s'étendant à travers le cartilage de poitrine est réalisée, qui s'étend dans un plan de coupe frontale perpendiculaire au plan médian (20), le plan de coupe frontale formant, avec un plan frontal (38) de la carcasse de poitrine (4), perpendiculaire au plan médian (20) et perpendiculaire au plan transversal (34), un angle pouvant aller jusqu'à 30°, au moins une partie du cartilage de poitrine (24) étant séparée de la carcasse de poitrine (4).

11. Procédé selon la revendication 10, **caractérisé en ce que** le plan frontal (38) de la carcasse de poitrine (24) est orientée verticalement ou dans une plage angulaire pouvant aller jusqu'à 10°, 15°, 20° ou 30° par rapport à la verticale.

12. Procédé selon la revendication 10 ou 11, **caractérisé en ce que** la coupe transversale et la coupe frontale s'étendent à partir d'un point de départ commun ou d'une ligne de départ commune.

13. Procédé selon l'une des revendications 10 à 12, **caractérisé en ce que** la coupe transversale et la coupe frontale sont réalisées simultanément.

14. Procédé selon l'une des revendications 10 à 13, **caractérisé en ce qu'**une coupe transversale supplémentaire, s'étendant dans la direction opposée à la coupe transversale, est réalisée, qui peut s'étendre dans le même plan que la coupe transversale.
